# EUROPÄISCHE PATENTSCHRIFT

(11) **EP 0 804 976 B1**
(45) Veröffentlichungstag und Bekanntmachung des Hinweises auf die Patenterteilung: **04.07.2001**
(21) Anmeldenummer: 97106239.3
(22) Anmeldetag: 16.04.1997
(51) Int. Cl.: B07C 5/10

(54) **Vorrichtung zur Vermessung and Sortierung von Werkstücken**
Device for measuring and sorting workpieces
Dispositif de mesure et de tri de pièces

(30) Priorität: 26.04.1996 DE 19616708
(43) Veröffentlichungstag der Anmeldung: 05.11.1997
(60) Teilanmeldung: 00124892.1
(73) Patentinhaber: Hörmle, Wolfgang, 78588 Denkingen (DE); Visicontrol Gesellschaft für elektronische Bildverarbeitung mbH, 88250 Weingarten (DE)
(72) Erfinder: Hörmle, Wolfgang, 78588 Denkingen (DE); Ebi, Christian, 88353 Kisslegg (DE); Reich, Wolfgang, 88250 Weingarten (DE); Rau, Wilfried, 88353 Kisslegg (DE)
(74) Vertreter: Patentanwälte Eisele, Otten, Roth & Dobler

(56) Entgegenhaltungen:
- DE-A- 3 012 559
- GB-A- 2 271 846
- US-A- 4 530 434

## Beschreibung

Die Erfindung betrifft eine Vorrichtung zur Vermessung und Sortierung von Werkstücken nach dem Oberbegriff des Anspruchs 1.

Eine solche Vorrichtung ist z.B. aus dem Dokument GB-A-2271846 bekannt.

Werkstücke verschiedenster Art, insbesondere Schrauben, Bolzen und ähnliche Kleinteile, die in großen Mengen hergestellt werden, müssen eine Endkontrolle zur Prüfung der Fertigungsgenauigkeit durchlaufen. Schlechte Teile, d. h. Teile die in ihren Ausmaßen nicht in einem vorgegebenen Intervall von Fertigungstoleranzen liegen, müssen aussortiert werden. Die Hersteller der entsprechenden Werkstücke müssen die Fertigungsqualität garantieren, weshalb möglichst jedes Teil auch einer großen Serie geprüft werden muß.

Hierzu sind Vorrichtungen bekannt geworden, bei denen die Werkstücke über eine Fördervorrichtung vor eine Kamera positioniert werden, an die eine Bildauswerteeinheit angeschlossen ist. Der jeweilige Gegenstand wird entsprechend seiner jeweiligen Lage vor der Kamera mit seinen Konturen aufgenommen, so daß entsprechende Maße zwischen den Konturen über die Bildauswerteeinheit erfaßbar sind.

Die Werkstücke können hierzu im freien Fall vor der Kamera durchfallen, oder aber über eine Gleitschiene geführt werden. Bei der Messung im freien Fall ist eine Positionierung mit definierter Stellung des Werkstücks vor der Kamera nicht möglich, wodurch sich Fehler im Meßergebnis ergeben können.

Im Falle einer Gleitschiene bestand bislang der Nachteil, daß der Bereich der Auflage des Werkstücks auf der Gleitschiene nicht als scharfe Kontur zu erfassen war. Das aufliegende Werkstück war nur durch eine sogenannte indirekte Messung mit seiner Auflagekante auf der Gleitschiene zu erfassen, bei der von einem Fixpunkt aus die Gleitschiene mitgemessen und anschließend vom Meßergebnis abgezogen wird.

Ein besseres Ergebnis, d. h. ein Ergebnis mit höherer Genauigkeit läßt sich jedoch durch direkte Messung erzielen, wie dies bei freischwebenden Werkstücken der Fall ist, sofern eine definierte Lage des Werkstücks erzielt wird.

Aufgabe der Erfindung ist es daher, eine Messvorrichtung vorzuschlagen, bei der einerseits eine definierte Position der Werkstücke erreicht wird und andererseits eine direkte Messung über alle notwendigen Konturenlinien durchgeführt werden kann.

Diese Aufgabe wird ausgehend von einer Vorrichtung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, daß eine Gleitschiene verwendet wird, die wenigstens im Bereich der Werkstückauflage aus transparentem Material in Bezug zum Strahlungsspektrum der für die Beleuchtung der Werkstücke verwendeten Leuchtquelle besteht. Hierdurch ist es möglich, auch die auf der Gleitschiene aufliegenden Kontur unmittelbar über die Kamera zu erfassen und anschließend durch die Bildauswerteeinheit auszumessen. Durch die Gleitschiene wird die gewünschte definierte Position des Werkstücks erzielt, während durch die transparente Ausbildung der Gleitschiene der komplette Außenumfang des Werkstücks einer Bilderfassung zugänglich wird.

Vorzugsweise wird als Leuchtquelle eine Infrarotquelle und als Kamera entsprechend eine Infrarot-Kamera verwendet. Dies hat den Vorteil, daß die Beleuchtung und die Bilderfassung unabhängig von den jeweiligen Lichtverhältnissen am Einsatzort der Vorrichtung ist.

In einer besonderen Ausführungsform kann zusätzlich ein Tageslichtfilter beispielsweise vor dem Objektiv der Kamera verwendet werden, um auch die letzten Störeffekte durch das Tageslicht auszuschalten.

In einer besonderen Ausführungsform der Erfindung wird die Gleitschiene wenigstens im Bereich der Werkstückauflage aus Glas gefertigt. Infrarotdurchlässige Glasscheiben sind kostengünstig erhältlich und mit einer ausreichender Planparallelität der Grenzflächen kostengünstig zu erhalten.

Die Gleitschiene wird mit einem V- oder L-förmigen Querschnitt ausgebildet. Dies bietet insbesondere bei Drehteilen, die eine Rotationssymmetrie aufweisen, den Vorteil, daß diese sich bei einer geneigten Lage der V-Schiene definiert so in diese Gleitschiene einfügen, daß die Achse der Werkstücke in der winkelhalbierende Ebene der V-Schiene liegt. Weiterhin ist die der Gleitschiene zugewandte Kontur des Werkstücks bei dieser Ausbildung immer ein wenig vom Scheitel des V-Profils erhöht. Das für die Darstellung der Werkstückkontur verwendete Licht muß so nur die vergleichsweise dünne Wand der Gleitschiene queren. Dies ist mit größerer Transmission möglich, als im Bereich des Scheitelpunkts, wo die beiden Winkelstücke aufeinandertreffen. Auf diese Weise kann das Werkstück quasi freischwebend in definierter Lage von der Kamera erfaßt werden.

Als vorteilhaft hat sich die Verwendung einer drehbaren Schiene erwiesen. Hierdurch ist es möglich, die oben genannten Vorteile bei Drehteilen zu erzielen und andererseits auch Werkstücke mit anderer Geometrie, beispielsweise scheibenartige Werkstücke, vermessen zu können. Für die Drehteile wird die V- oder L-Schiene so gedreht, daß diese auf die Scheitellinie der Drehschiene zugleiten und dort die oben angegebenen definierte Position mit ihrer Achse in der winkelhalbierenden Ebene einnehmen. Für scheibenförmige Teile wird die Gleitschiene soweit gedreht, bis ein Winkelstück des V- bzw. L-Profils eine zuverlässige Auflagefläche für die zu vermessenden Werkstücke bildet. Eine leichte Neigung der Auflagenfläche sorgt hierbei dafür, daß die scheibenartigen Werkstücke zuverlässig soweit in das L- bzw. V- Profil hineingleiten, bis sie an dem zweiten Schenkel des Profils anstoßen. Hierdurch wird ein definierter Abstand zur Kamera vorgegeben.

Besonders vorteilhaft ist es, die Gleitschiene so anzuordnen, daß bei einem Verdrehen der Gleitschiene die Kamera und die Leuchtquelle fixiert bleiben.

In einer besonderen Ausführungsform der Erfindung werden zwei getrennte Fördereinheiten vorgesehen. Eine erste Fördereinheit, die beispielsweise in Form eines Vibrationsförderers ausgebildet sein kann, fördert die zu vermessenden Werkstücke aus einem Vorratsbehälter hierbei mit einer vergleichsweise langsamen Fördergeschwindigkeit. Eine zweite schnellere Fördereinheit, beispielsweise ein Förderband, nimmt die Werkstücke von der langsameren Fördereinheit auf, wodurch sich ein Vereinzelungseffekt ergibt. Durch die Einstellung der jeweiligen Fördergeschwindigkeiten läßt sich der Abstand der einzelnen Werkstücke bestimmen.

Bevorzugt wird vor der Gleitschiene ein Vorsortierer vorgesehen. Dieser Vorsortierer kann beispielsweise in Form eines Gebläses im Bereich der zweiten Fördereinheit angebracht werden. Über diesen Vorsortierer können die Werkstücke aufgrund einer groben Vormessung vorsortiert werden. Diese Messung kann beispielsweise in Form einer Laufzeitmessung der Werkstücke geschehen. Hierzu empfiehlt sich ein sogenannter Laservorhang, mit dem die durchlaufenden Werkstücke erfaßt werden können. Sofern die Werkstücke eine sehr stark abweichende Länge oder so dicht aufeinanderfolgen, daß sie als zusammenhängendes Teil erfaßt werden, aufweisen, können Sie von dem Vorsortierer, beispielsweise dem Gebläse von der schnelleren zweiten Fördereinheit entfernt, beispielsweise heruntergeblasen werden. Eine entsprechende Steuerung sorgt für die notwendige Auswertung des Lasersignals sowie die Ansteuerung des Vorsortierers.

In einer vorteilhaften Ausführungsform wird zusätzlich eine kontinuierliche betriebene Düse vorgesehen, um kleinere Fremdkörper wie Späne oder sonstige Verunreinigungen vor dem Erreichen der Gleitschiene auszublasen. Auf diese Weise bleibt die transparente Gleitschiene von den Verunreinigungen geschützt.

Der Übergang von den Fördereinrichtungen auf die Gleitschiene wird bevorzugt über einen Luftspalt durchgeführt, so daß die Gleitschiene von sämtlichen Vibrationen und sonstigen Störbewegungen der Fördereinheiten nicht beeinträchtigt wird.

Die Präzision der Messungen läßt sich dadurch verbessern, daß durch eine möglichst kurze Momentaufnahme unabhängig von der Gleitbewegung der Werkstücke das Bild erfaßt wird. Eine derartige Momentaufnahme kann zum einen über eine entsprechend gepulst betriebene Kamera bewerkstelligt werden. In einer vorteilhaften Ausführungsform empfiehlt sich zusätzlich der Einsatz einer gepulsten Leuchtquelle. Für die Zeitdauer der Momentaufnahme ist somit das jeweils kürzere Zeitsignal, entweder für die gepulste Leuchtquelle oder aber für die gepulst betriebene Kamera ausschlaggebend.

Für den Impulsbetrieb sowohl der Leuchtquelle als auch der Kamera ist ein Triggersignal notwendig, das vorzugsweise über einen Detektor ausgelöst wird, der im Bezug zur Gleitrichtung vor der Kamera an der Gleitschiene montiert ist. Als Detektor hat sich hier ein weiterer Laservorhang als Trigger für die Leuchtquelle und/oder die Kamera bewährt.

Vorteilhafterweise wird nach der Bilderfassung des Werkstücks am Ende der Gleitschiene eine Auslaufschiene mit Weiche vorgesehen. Über die Weiche kann das Werkstück in entsprechende Behälter sortiert werden. Hierzu sind wenigstens zwei Behälter vorzusehen, die von der Weiche ansteuerbar sind. Im Falle von lediglich zwei Sortierbehältern werden in einen Behälter die als gut befundenen Teile und in den anderen Behälter die Ausschußware geleitet. Denkbar wäre auch eine Sortierung in verschiedene Bereiche von Fertigungstoleranzen, die entsprechende Güteklassen der Werkstücke definieren können.

Die Auslaufschiene wird wiederum bevorzugt nicht unmittelbar mit der Gleitschiene verbunden, sondern übernimmt die Werkstücke über einen kleinen Luftspalt. Hierdurch bleibt die Gleitschiene von Erschütterungen, die durch das Betätigen der Weiche ausgelöst werden können, verschont.

Die Weiche kann mit verschiedenen Antriebssystemen versehen sein. Im Einsatz bewährt hat sich eine Weiche mit elektrischem Antrieb. Hierbei empfiehlt sich der Einsatz einer elektronischen Steuerung, die Überspannungspulse oberhalb der Nennspannung der Weiche erzeugen kann. Durch derartige Überspannungspulse wird die Weiche schneller, wobei durch die kurzzeitige Belastung aufgrund der Zeitverteilung der Pulse ein Defekt durch Überbelastung ausgeschlossen wird.

In einer besonders vorteilhaften Ausführungsform wird ein zusätzlicher Detektor, beispielsweise ein weiterer Laservorhang als Trigger für die Weiche vorgesehen. Hiermit kann die Weiche so gesteuert werden, daß Teile, die im Bereich der Weiche ankommen und noch nicht ausgewertet sind, stets der Ausschußware zugeordnet werden. Bevorzugt wird hierbei die Standardeinstellung der Weiche so gewählt, daß diese ankommende Ware als Ausschußware sortiert. Nur in einem bestimmten Zeitintervall ab dem genannten Triggersignal wird die Umschaltung der Weiche aufgrund positiver Bildauswertung zugelassen.

In einer weiteren besonderen Ausführungsform werden mehrere Kameras vorzugsweise über einen Linearmanipulator verschiebbar, angeordnet. Durch die Verwendung mehrerer Kameras, die vor allem unterschiedliche Objektive aufweisen können, ist es möglich, mit einer Vorrichtung unterschiedlichste Werkstücke verschiedener Größenordnungen zu vermessen und dabei stets eine möglichst hohe Meßgenauigkeit zu gewährleisten. Durch die verschiebbare Ausführung der verschiedenen Kameras entfällt eine aufwendige Justage beim Umschalten auf eine andere Kamera.

Bevorzugt wird die optische Anordnung der Leuchtquelle und der jeweiligen Kamera telezentrisch ausgebildet. Dies bedeutet, daß die von der Leuchtquelle bzw. deren Objektiv austretenden Strahlen einen zur optischen Achse parallelen Strahlengang aufweisen. Aufgrund der bereits oben angedeuteten Planparallelität der einzelnen Schenkel der Meßschiene bleibt dieser parallele Strahlengang beim Durchtritt durch das transparente Medium erhalten.

Die Werkstücke werden bevorzugt so angeordnet (durch entsprechende Ausrichtung der Gleitschiene), daß die zu vermessenden Strecken senkrecht zu dem parallelen Strahlenbündel der Leuchtquelle liegen, so daß die gewünschten Werkstückkonturen erfaßt werden. Die Kamera bildet dieses parallele Strahlenbündel anschließend auf seinen Detektor, zum Beispiel einen Diodenarray ab. Durch die telezentrische Ausbildung der Optik spielt der Abstand des Werkstücks von der Kamera keine Rolle mehr.

In einer besonders vorteilhaften Ausführungsform werden in der Bildauswerteeinheit Mittel zur Verbesserung der Meßgenauigkeit über die Auflösung der Kamera hinaus vorgesehen.

Diese Mittel zur Verbesserung der Meßgenauigkeit umfassen in einer besonderen Ausführungsform eine Vorauswahl eines Suchpfads über eine zu vermessende Konturenlinie, die in einem Diagramm der gemessenen Grauwerte entlang des Suchpfades als Kante erscheint, innerhalb eines sogenannten Binärbildes. Ein solches Binärbild kommt dadurch zustande, daß ein bestimmter Schwellenwert für den Grauwert jedes Pixels des Kamerabilds bestimmt wird, wobei der Wert 0 (schwarz) bzw. der Wert 255 (weiß) gesetzt wird, je nach dem ob der tatsächliche Grauwert des Pixels unterhalb oder oberhalb des Schwellenwertes liegt. Durch ein derartiges Binärbild können die zu vermessenden Punkte einer Kontur bzw. die Kanten grob erfaßt werden.

In einer weiteren vorteilhaften Ausführungsform werden sodann die Grauwerte benachbarter Pixel, beispielsweise dreier benachbarter Pixel entlang dem Suchpfad gemittelt. Falls der Suchpfad treppenartig ist, was unter Umständen aufgrund eines bezüglich der Matrixanordnung eines Diodenarrays der Kamera schrägen Verlaufs der Fall ist, können die einzelnen Grauwerte bei der Mittelwertbildung zudem gewichtet werden.

Vorzugsweise wird die exakte Lage der Kante sodann dadurch herausgefunden, indem eine oder mehrere mathematische Funktionen, beispielsweise Splines über die gefundenen Grauwerte angepaßt wird bzw. diese interpolieren und der Wendepunkt dieser Interpotationskurve einen Punkt an der Kontur des Werkstücks definiert.

Vorteilhafterweise wird ein Koordinatensystem, innerhalb dem Meßpunkte wie oben angeführt bestimmt werden, parallel zu zwei rechtwinklig zueinanderstehenden Konturenlinien des Werkstücks festgelegt. Bevorzugt wird hierbei nach der oben genannten Methode ein Konturenpunkt entlang einer sogenannten Fanglinie parallel zur Gleitschiene und zwei Konturenpunkte entlang zweier Fanglinien, die ungefähr die gewünschte Konturenlinie des Werkstücks queren, gesucht. Durch die definierte Position des Werkstücks in der Gleitschiene kann eine derartige Auswertung eingestellt werden. Durch zwei Punkte auf einer gewünschten und gefundenen Konturenlinie läßt sich die erste Koordinatenachse als gerade Fortsetzung dieser Konturenlinie finden, wobei sich die zweite Achse des Koordinatensystems durch das Lot des einen Punktes, der parallel zur Gleitschiene gesucht wurde, auf die erste Achse ergibt.

Innerhalb eines einmal, beispielsweise auf die geschilderte Weise festgelegten Koordinatensystems, dessen Achsen wie erwähnt zwei rechtwinklig zueinander verlaufenden Konturenlinien des Werkstücks folgen, werden sodann alle weiteren Meßpunkte bestimmt.

Je nach Werkstück und Form der Gleitschiene sind verschiedene fest vorgegebene Positionen der Werkstücke auf der Gleitschiene möglich. Bei einem Drehteil in einer V- oder L-Schiene sind beispielsweise zwei Ausrichtungen möglich, in der die Achse des Drehteils auf der winkelhalbierenden Ebene der Schiene liegt und das Werkstück in der Schiene aufliegt. Um hier unterschiedliche, jedoch fest definierte Positionen zuzulassen und gute Werkstücke dennoch herauszufinden, wird in einer bevorzugten Ausführungsform so vorgegangen, daß die mehrere Auswertungen des Bildes stattfinden, wobei jeweils von einer möglichen Ausrichtung des Werkstücks ausgegangen wird. Sofern auch nur bei einer Auswertung ein korrektes Meßergebnis geliefert wird, kann das Werkstück sodann als gutes Teil sortiert werden, da diese Auswertung der tatsächlichen Lage des Werkstücks innerhalb der Gleitschiene vor der Kamera entspricht.

Die Kalibrierung des beschriebenen Meßsystems wird vorteilhafterweise durch Eichenkörper vorgenommen, die entsprechend präzisise vorgefertigt und geprüft sind.

Ein Ausführungsbeispiel der Erfindung ist in der Zeichnung dargestellt und wird anhand der nachfolgenden Beschreibung näher erläutert.

Im einzelnen zeigen
- Fig. 1: eine schematische Seitenansicht der erfindungsgemäßen Vorrichtung,
- Fig. 2: eine perspektivische Darstellung der aus Leuchtquelle, Gleitschiene und mehreren Kameras bestehenden Anordnung,
- Fig. 3: eine Draufsicht auf eine Vorrichtung gemäß Fig. 1,

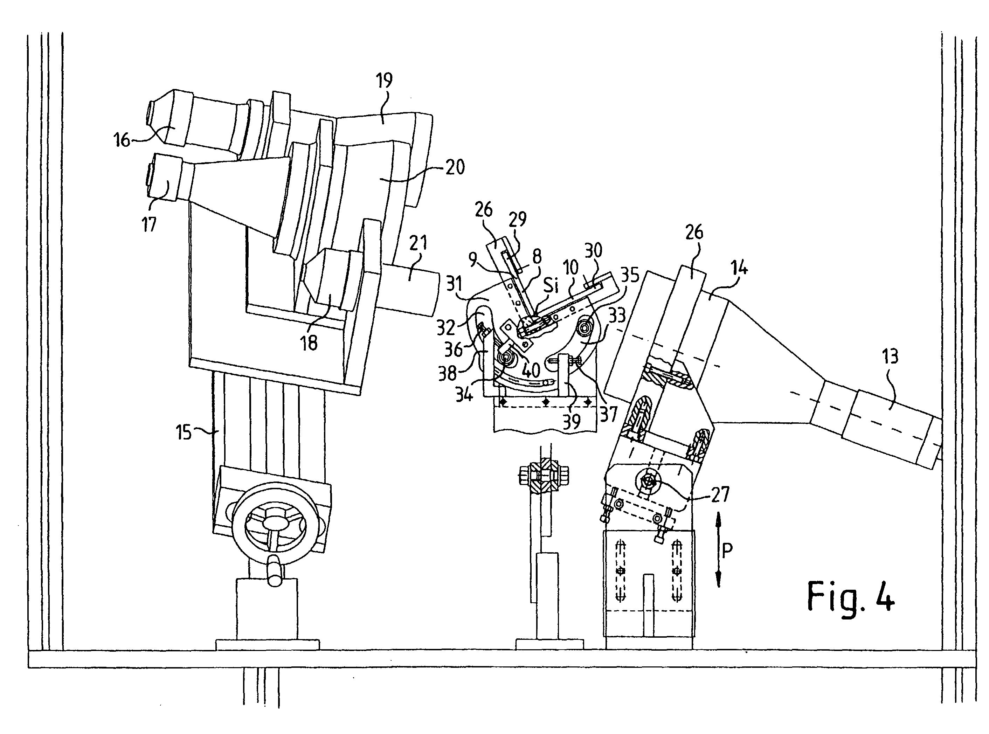

- Fig. 4: einen Querschnitt durch eine Anordnung gemäß Fig. 2,
- Fig. 5: ein Blockdiagramm der Bildauswerteeinheit und der Steuereinheit,
- Fig. 6: ein Diagramm zur Veranschaulichung der Kantensuche und
- Fig. 7: ein Diagramm zur Veranschaulichung der endgültigen Bestimmung eines Kantenpunktes.

Die Vorrichtung 1 zur Vermessung und Sortierung von Werkstücken umfaßt zwei Gestelle 2, 3, wobei auf einem Gestell 2 ein Vibrationsförderer 4 und auf dem anderen Gestell 3 eine Meßanordnung 5 sowie eine Sortieranordnung 6 zur Vermessung und Sortierung der Werkstücke aufgebaut ist.

Zwischen dem Vibrationsförderer 4 und der Meßanordnung 5 befindet sich ein Bandförderer 7.

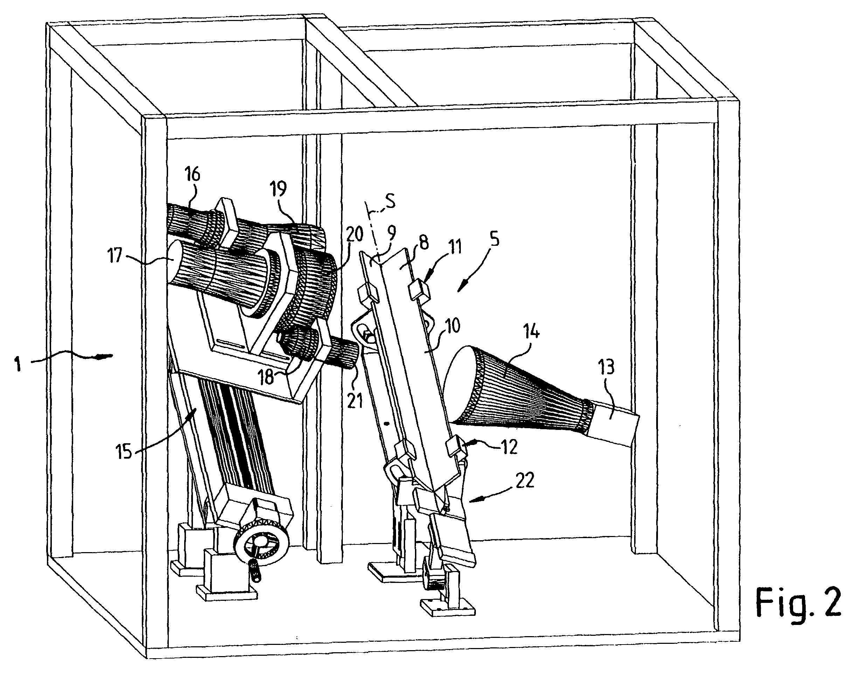

In Fig. 2 ist die Meßanordnung 5 deutlicher und in perspektivischer Darstellung erkennbar. Die Meßanordnung 5 umfaßt eine Gleitschiene 8, die aus zwei entlang einer Scheitellinie S zusammengefügten Winkelstücken 9, 10 besteht, so daß sich ein V-bzw. L-Profil der Gleitschiene 8 ergibt. Die Gleitschiene 8 ist in zwei drehbaren Halterungen 11, 12 befestigt, worauf weiter unten näher eingegangen wird.

Eine Leuchtquelle 13 mit einem Objektiv 14 ist an einer Seite der Gleitschiene 8 angeordnet. Auf der anderen Seite der Gleitschiene sind an einem Linearvorschub 15 drei Kameras 16, 17, 18 mit unterschiedlichen Objektiven 19, 20, 21 befestigt. Der Linearmanipulator 15 ist so ausgerichtet, daß die Kameras 16, 17, 18 parallel zur Gleitschiene 8 verschiebbar sind.

Die Gleitschiene 8 sowie zwei Auslaufschienen 23, 24 sind aus Gründen der Übersichtlichkeit nicht in voller Länge dargestellt, sondern an ihren jeweils zur Weiche 22 hinweisenden Enden abgeschnitten.

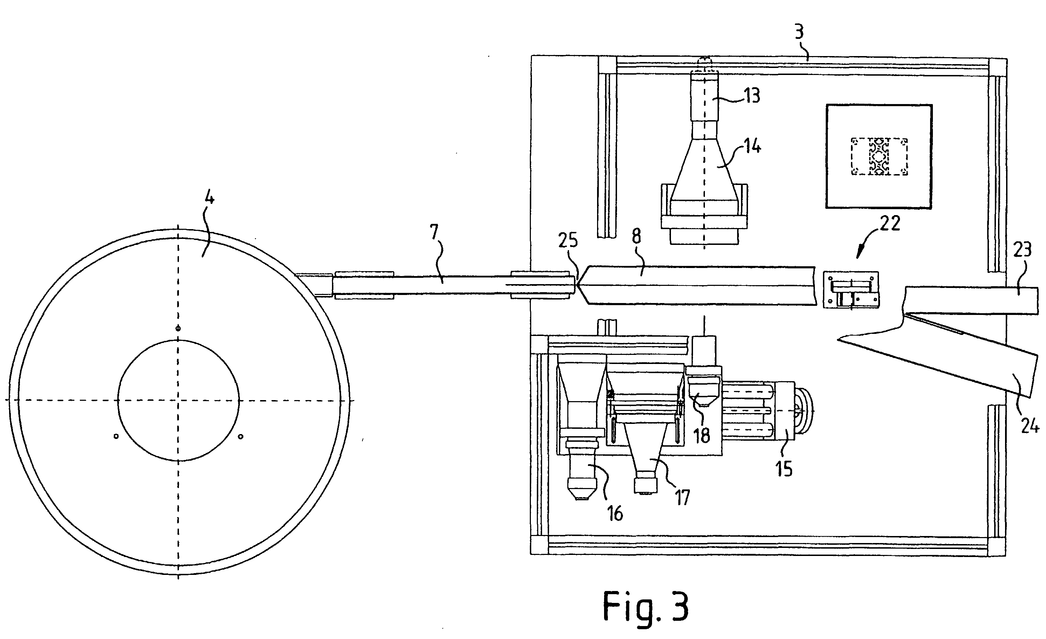

Deutlich zu erkennen ist in Fig. 3, daß die Gleitschiene 8 keinen Kontakt zum Bandförderer 7 aufweist, da sich ein kleiner Luftspalt 25 zwischen dem Bandförderer 7 und der Gleitschiene 8 befindet.

Die Leuchtquelle 13 ist über das Objektiv 14 in einer Fassung 26 gehaltert, die um eine Drehachse 27 drehbar und in Richtung des Doppelpfeils P in der Höhe justierbar ist. Ebenso ist auch in nicht näher dargestellter Weise der Linearvorschub 15 für die Kameras 16, 17, 18 einstellbar.

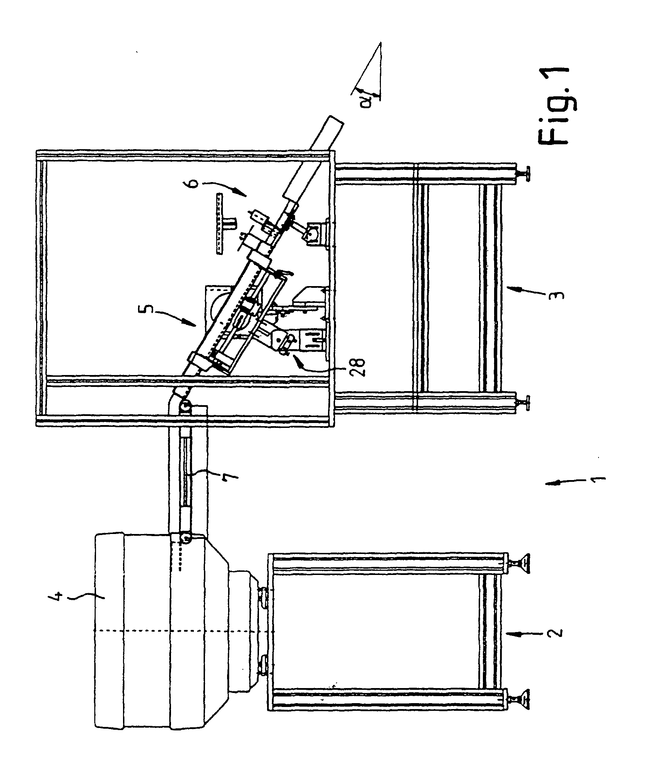

Die Gleitschiene 8, die über eine entsprechende Halterung 28 (s. Fig. 1) mit ihrem Neigungswinkel α verstellbar ist, ist wie oben bereits angedeutet drehbar um eine zur Scheitellinie S parallele Drehachse. Hierzu ist die Gleitschiene 8 in zwei Fassungen 26 gelagert, die ein der Gleitschiene 8 angepaßtes V-Profil aufweisen. Die Fassung 26 umgreift die äußeren Ränder 29, 30 der beiden Winkelstücke 9, 10 der Gleitschiene 8. Jede Fassung 26 ist an einer Drehplatte 31 befestigt, die zwei gekrümmte Langlöcher 32, 33 aufweist, die paßgenau von zwei Führungsstäben 34, 35 durchsetzt sind. Hierdurch ergibt sich eine Drehführung für die Drehplatte 31 nach Art einer Kulissenführung. Zwei Anschlagschrauben 36, 37 in entsprechenden Halterungen 38, 39 definieren in Verbindung mit einem an der Drehplatte 31 befestigten Anschlag 40 zwei Endpositionen der Drehplatte 31 und somit der Gleitschiene 8.

Im Betrieb der erfindungsgemäßen Vorrichtung 1 werden nicht näher dargestellte Werkstücke in den Vibrationsförderer 4 gefüllt. Dieser fördert diese Werkstücke im wesentlichen bereits vereinzelt zum Bandförderer 7. Der Bandförderer 7 weist eine größere Fördergeschwindigkeit als der Vibrationsförderer 4 auf, so daß die aufgenommenen Werkstücke weiter voneinander beabstandet werden. Nicht näher dargestellte Mittel zur Vorsortierung, zum Beispiel mit einem Laservorhang zur Laufzeitmessung sowie Ausblasdüsen sortieren die Werkstücke auf dem Bandförderer 7 vor. Eng zusammenliegende Werkstücke, die durch die Laufzeitmessung als ein Werkstück gemessen werden oder Werkstücke, die in einem bestimmten Maß deutlich von einem vorgegebenen Wert abweichen und somit keine regulären Werkstücke darstellen können, werden dadurch aussortiert. Hierdurch ist sichergestellt, daß nur tatsächlich zu vermessende Werkstücke zur Gleitschiene 8 transportiert werden.

Weiterhin ist vor der Gleitschiene 8 bevorzugt, wie oben angeführt, eine Düse angeordnet, um durch Ausblasen leichte Gegenstände, wie Späne und sonstige Verunreinigungen abzutrennen. Der Bandförderer 7 ist am Vibrationsförderer 4 bzw. dessen Gestell 2 befestigt. Durch die getrennnten Gestelle 2, 3 sowie den Luftspalt 25 ist somit sichergestellt, daß keine Erschütterungen der Fördervorrichtungen 4, 7 auf die Gleitschiene 8 übertragen werden können.

Rotationssymmetrische Werkstücke wie Drehteile werden in einer ersten Winkelstellung der Gleitschiene 8 gemessen, in der diese Werkstücke durch ihr Eigengewicht auf die Scheitellinie S der Gleitschiene 8 hingezogen werden. Da derartige Werkstücke, beispielsweise Schrauben, entlang ihrer Achse unterschiedliche Umfänge aufweisen können, ist somit eine Positionierung der Gleitschiene 8 möglich, bei der die Achse des Werkstücks zwar in der genannten winkelhalbierenden Ebene liegt, jedoch eine Neigung zur Scheitellinie S der Gleitschiene 8 aufweist. Im Falle zweier unterschiedlicher Umfänge der Werkstücke entlang ihrer Achse, beispielsweise bei Schrauben mit einem Gewindeabschnitt und einem Schraubenkopf, sind hierduch genau zwei definierte Lagen in der Gleitschiene 8 vorgegeben (in Bezug zur Gleitrichtung steht entweder der Schraubenkopf oder der Gewindeabschnitt nach vorne).

Die Leuchtquelle 13 mit ihrem Objektiv 14 sowie die jeweils von den Kameras 16, 17, 18 zum Einsatz kommende Kamera sind exakt senkrecht zur Achse, d. h. senkrecht zur Scheitellinie S, der Gleitschiene 8 angeordnet. Hierdurch ist sichergestellt, daß die durchgleitenden Werkstücke in der Kamera 16, 17, 18 in einer rechtwinkligen Projektion abgebildet werden.

Durch die telezentrische Ausbildung der Objektive 14, 19, 20, 21 wird die Gleitschiene 8 stets unter parallelem Strahlengang durchleuchtet. Hierdurch spielt der Abstand der jeweiligen Kamera 16, 17, 18 bzw. deren Objektiv 19, 20, 21 von der Gleitschiene 8 keine Rolle.

Die Gleitschiene 8 besteht zumindest im Meßbereich, d. h. in dem Bereich zwischen der Leuchtquelle 13 und der jeweils zum Einsatz kommenden Kamera 16, 17, 18 aus transparentem Material, beispielsweise aus Glas, bezüglich des Strahlungsspektrums der Leuchtquelle 13. Die Winkelstücke 9, 10 queren in dieser Meßposition den Strahlengang der Beleuchtungsquelle 13 so, daß der Weg, den die entsprechende Lichtstrahlung durch die Gleitschiene 8 hindurchtreten muß, vergleichsweise klein ist. Durch das entsprechend hohe Transmissionsvermögen des ausgewählten Materials entsteht hierdurch eine Bildaufnahme, in der das Werkstück einen deutlichen Kontrast zur umgebenden Gleitschiene 8 aufweist. Dies ermöglicht eine direkte Messung aller in der beschriebenen Projektion abgebildeten Kanten des Werkstücks. Das Bild zeigt ein quasi freischwebendes Werkstück.

Im Falle scheibenartiger Werkstücke ist eine Messung notwendig, bei der eine flache Seite des Werkstücks auf dem Winkelstück 9 flach aufliegt. Hierzu wird die Gleitschiene 8 soweit gedreht, bis die Ebene des Winkelstücks 9 parallel zu den Achsen der Leuchtquelle 13 bzw. der jeweils eingesetzten Kamera 16, 17, 18 liegt. Hierdurch wird eine seitliche Projektion des Werkstücks abgebildet. Die Anordnung der optischen Achsen ist so gewählt, daß bei einer derartigen Ausrichtung der Gleitschiene 8 das Winkelstück 9 eine schwache Neigung aufweist, so daß das Werkstück in Richtung zum inneren Scheitelpunkt SI gleitet und am anderen Winkelstück 10 anstößt.

Die verschiedenen Kameras 16 bis 18 sind für den Einsatz bei verschieden großen Werkstücken gedacht. Es kann jeweils die Kamera 16, 17, 18 mit der entsprechenden Vorsatzoptik 19, 20, 21 gewählt werden, die bei vollständiger Abbildung des Werkstücks die beste Auflösung bietet. Durch den Linearmanipulator 15 kann problemlos die jeweils benötigte Kamera in die gegenüber der Leuchtquelle 13 liegende Position verfahren werden.

Die oben angeführten Detektoren, z. B. Laservorhänge, einerseits zum Triggern der Leuchtquelle 13 bzw. der eingesetzten Kamera 16, 17, 18 und andererseits zum Triggern der Weiche 22 sind in den Figuren nicht näher dargestellt, sind jedoch entlang der Gleitschiene 8 angeordnet.

Je nach Stellung der Weiche 22, die im übrigen zur Vermeidung von Erschütterungen ebenfalls mit der Gleitschiene 8 in Berührung steht, wird das Werkstück auf die Auslaufschiene 23 oder auf die Auslaufschiene 24 geleitet. Am Ende dieser Auslaufschienen 23, 24 werden nicht näher dargestellte Auffangbehälter angebracht. Einer dieser Behälter sammelt demnach für gut befundene Werkstücke, während in dem anderen Behälter der Ausschuß abgelegt wird.

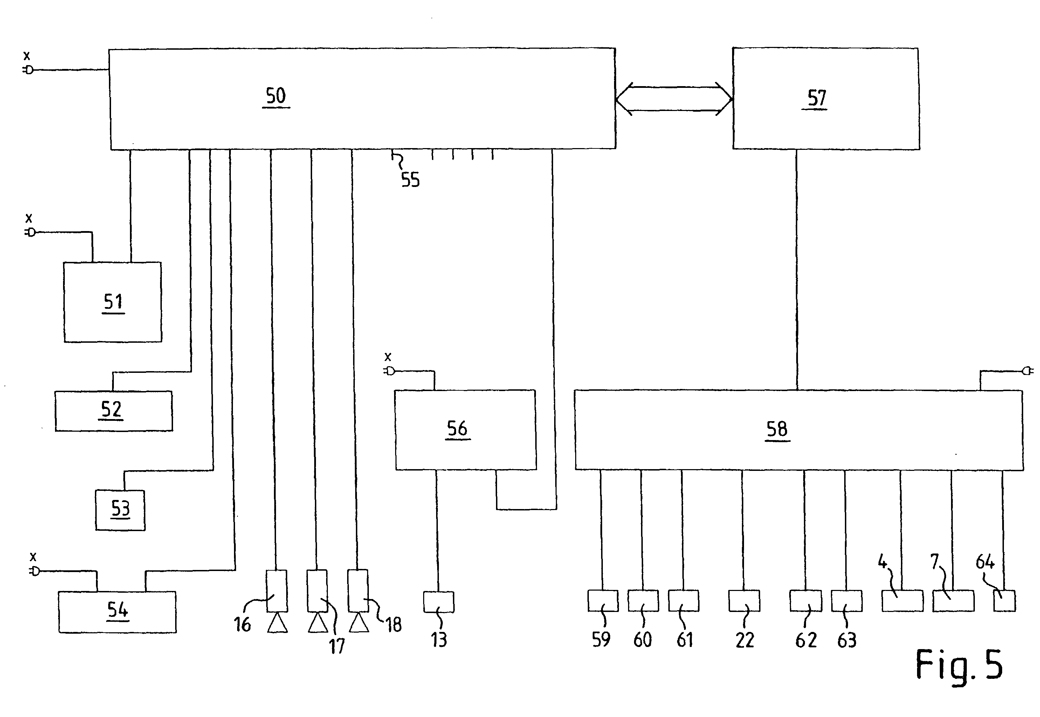

Die Bildauswertung und die Steuerung der Vorrichtung 1 wird anhand von Fig. 5 beschrieben. Ein Rechner 50 zur Bildverarbeitung verfügt über einen Monitor 51, eine Tastatur 52, eine Maus 53 sowie einen Drucker 54. Die drei Kameras 16, 17, 18 stehen ebenfalls mit der Bildverarbeitungssystem 50 in Verbindung. Weitere Schnittstellen, z. B. parallele Schnittstellen, serielle Schnittstellen oder Busschnittstellen sind mit den Linien 55 angedeutet. Die Leuchtquelle 13 wird von einer Steuerung 56, die ebenfalls mit dem Bildverarbeitungssystem 50 kommuniziert, gesteuert. Ein separater Controller 57 arbeitet mit der Bildverarbeitung 50 zusammen und steuert bzw. erfaßt die Signale der weiteren über einen Verteiler 58 zugeschalteten Komponenten. Derartige Komponenten können in Form von Laservorhängen 59, 60, 61 der Weiche 22, Düsen 62, 63, dem Vibrationsförderer 4 sowie dem Bandförderer 7 vorliegen. Eine Steckdosenleiste 64 dient zum Anschluß weiterer Komponenten.

Der Controller 57 steuert die aufgezählten Komponenten in der vorbeschriebenen Weise und leitet die für den Betrieb, z. B. zum Triggern, notwendigen Signale an die Bildverarbeitungseinheit 50. Diese erfaßt mittels der über die Steuerung 56 gepulsten Lichtquelle 13 und die ausgewählte Kamera 16, 17 oder 18 eine Momentaufnahme des Werkstücks. Nach einer Bildauswertung wie weiter unten näher erläutert erhält der Controller 57 die für die Sortierung notwendige Information zum Stellen der Weiche 22. Sofern er keine Information oder eine zu späte Information erhält, wird die Weiche 22 vom Controller immer so gestellt, daß das entsprechende Werkstück dem Ausschuß zugeordnet wird.

Aufgrund der fest definierten, möglichen Positionen jedes Werkstücks in Gleitschiene 8 ist es möglich, entlang vorgegebener Suchpfade nach Konturen des Werkstücks zu suchen, die sich durch einen Hell-Dunkel-Übergang im Bild äußern. Vorzugsweise wird ein derartiger Suchpfad so weit als möglich senkrecht zu einer Konturenlinie gelegt. Eine grobe Festlegung des Schnittpunktes des Suchpfads der Konturenlinie bzw. der hell/dunkel Übergangskante wird über ein sogenanntes Binärbild durchgeführt. Zur Herstellung eines derartigen Binärbildes wird dem Grauwert jedes Pixels, das von der Kamera aufgenommen wird, je nachdem, ob der Grauwert unterhalb oder oberhalb einer vorgegebenen Schwelle liegt, ein Wert für schwarz (z. B. 0) oder für weiß (z. B. 255 im Falle einer 8-Bit-Grauabstufung) zugeordnet.

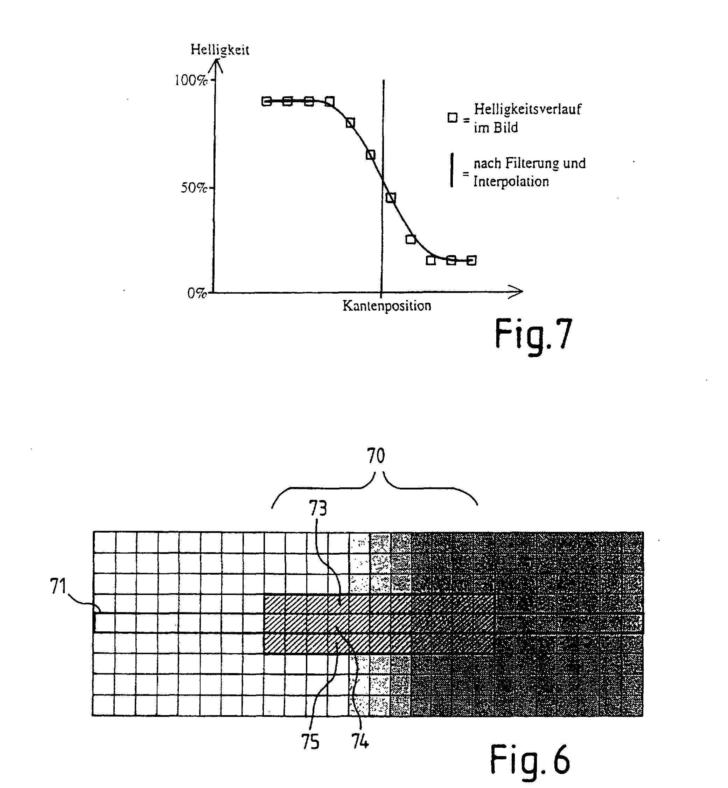

Anschließend wird die genaue Kantenposition wie nachfolgend anhand der Fig. 6 und 7 beschrieben gesucht. In Fig. 6 ist der Schwarz-Weiß-Übergang innerhalb eines Kantenbereichs 70 dargestellt. Ein Suchpfad 71, der im vorliegenden Fall unmittelbar benachbarte, als Quadrate eingezeichnete Pixel beinhaltet, quert den Übergangsbereich 70 bzw. die dadurch erfaßte Kante.

Im Übergangsbereich 70 wird nun der Grauwert jeweils dreier quer zum Suchpfad 71 benachbarter Pixel 73, 74, 75 gemittelt. Fig. 7 zeigt den Helligkeitsverlauf derart gemittelter Grauwerte in einem XY-Diagramm. Die Quadrate stellen hierbei die aufgenommenen Punkte der einzelnen Pixel dar.

Zur genaueren Auswertung wird nunmehr ein sogenannter Fit, z. B. ein sogenannter Splinefit, durchgeführt, d. h. eine oder mehrere mathematische Funktionen werden optimiert an die Meßwerte angepaßt und interpolieren diese dementsprechend. Die durchgezogene Linie gemäß Fig. 7 zeigt eine derartige Interpolation mit Splines. Der Wendepunkt der Interpolationskurve wird nun als exakte Kantenposition verwendet. Durch das genannte Auswerteverfahren ist es möglich, eine Genauigkeit zu erzielen, die über das Auflösungsvermögen der Kamera hinausgeht.

Mit der dargestellten Methode lassen sich beliebig viele Kantenpunkte des Werkstücks messen. Vorab wird hierzu ein Koordinatensystem definiert. Hierzu wird entlang der Achse der Gleitschiene 8 ein Kantenpunkt einer quer hierzu stehenden Kante gesucht. Mit zwei im wesentlichen senkrecht zur Gleitschiene 8 stehenden Suchpfaden wird sodann eine Gerade erfaßt, die parallel zu einer tatsächlichen Kante des Werkstücks liegt. Diese Gerade ergibt eine Achse des gesuchten Koordinatensystems. Die Projektion des vorbeschriebenen Punktes auf diese Gerade ergibt die zweite Achse. Auf diese Weise ist ein Koordinatensystem erhältlich, das in der Regel parallel zu zwei Konturenlinien des Werkstücks liegt. Die nun im folgenden zur Vermessung des Werkstücks ausgemessenen Punktkoordinaten sind hierdurch besonders einfach in die gesuchten Werkstückmaße umzusetzen.

Eine Weiterentwicklung der oben beschriebenen Kantensuche besteht darin, daß bei der Mittelung über benachbarte Pixel 73, 74, 75 eine Gewichtung vorgenommen wird. Dies ist dann von Vorteil, wenn der Suchpfad 71 nicht parallel zum Raster der Spalten und Reihen der Kamera verläuft, sondern hierzu querliegt und dementsprechend eine mehr oder weniger abgestufte Form aufweist.
- 1: Vorrichtung
- 2: Gestell
- 3: Gestell
- 4: Vibrationsförderer
- 5: Meßanordnung
- 6: Sortieranordnung
- 7: Bandförderer
- 8: Gleitschiene
- 9: Winkelstück
- 10: Winkelstück
- 11: Halterung
- 12: Halterung
- 13: Leuchtquelle
- 14: Objektiv
- 15: Linearvorschub
- 16: Ramera
- 17: Kamera
- 18: Kamera
- 19: Objektiv
- 20: Objektiv
- 21: Objektiv
- 22: Weiche
- 23: Auslaufschiene
- 24: Auslaufschiene
- 25: Luftspalt
- 26: Fassung
- 27: Drehachse
- 28: Halterung
- 29: Rand
- 30: Rand
- 31: Drehplatte
- 32: Langloch
- 33: Langloch
- 34: Führungsstab
- 35: Führungsstab
- 36: Anschlagschraube
- 37: Anschlagschraube
- 38: Halterung
- 39: Halterung
- 50: Rechner
- 51: Monitor
- 52: Tastatur
- 53: Maus
- 54: Drucker
- 55: Schnittstellen
- 56: Steuerung
- 57: Controller
- 58: Verteiler
- 59: Laservorhang
- 60: Laservorhang
- 61: Laservorhang
- 62: Düse
- 63: Düse
- 64: Steckdosenleiste
- 70: Übergangsbereich
- 71: Suchpfad
- 72: Pixel des Suchpfads
- 73: Pixel
- 74: Pixel
- 75: Pixel

## Patentansprüche

1. Vorrichtung (1) zur Vermessung und Sortierung von Werkstücken mit einer Gleitschiene (8) zur Auflage der Werkstücke, einer Leuchtquelle (13), einer Bilderfassungseinheit (16, 17, 18), einer Bildauswerteeinheit (50), einer Fördervorrichtung (4, 7) zur Förderung der Werkstücke zur Gleitschiene (8), wobei die Gleitschiene (8) wenigstens im Bereich der Werkstückauflage aus transparentem Material in Bezug zum Strahlungsspektrum der Leuchtquelle (13) besteht und eine V- bzw. L-Form mit einer Scheitellinie (5) aufweist, dadurch gekennzeichnet, dass die Gleitschiene (8) um eine zur Scheitellinie (5) parallele Drehachse drehbar angeordnet ist.

2. Vorrichtung nach Anspruch 1 dadurch gekennzeichnet, dass die Leuchtquelle (13) eine Infrarotleuchtquelle ist.

3. Vorrichtung nach einem der vorgenannten Ansprüche dadurch gekennzeichnet, dass das transparente Material der Gleitschiene (8) Glas ist.

4. Vorrichtung nach einem der vorgenannten Ansprüche dadurch gekennzeichnet, dass zwei unterschiedlich schnelle Fördereinheiten (4, 7) vorgesehen sind.

5. Vorrichtung nach einem der vorgenannten Ansprüche dadurch gekennzeichnet, dass als Fördereinheit ein Vibrationsförderer (4) und/oder ein Bandförderer vorgesehen sind.

6. Vorrichtung nach einem der vorgenannten Ansprüche dadurch gekennzeichnet, dass Mittel zur Vorsortierung vor der Gleitschiene (8) angeordnet sind.

7. Vorrichtung nach einem der vorgenannten Ansprüche dadurch gekennzeichnet, dass Ausblasmittel zum Ausblasen von Fremdkörpern wie Spänen oder sonstigen Verunreinigungen vor der Gleitschiene (8) vorgesehen sind.

8. Vorrichtung nach einem der vorgenannten Ansprüche dadurch gekennzeichnet, dass die Leuchtquelle (13) gepulst ist.

9. Vorrichtung nach einem der vorgenannten Ansprüche dadurch gekennzeichnet, dass ein Detektor als Trigger für die Leuchtquelle (13) und/oder die Bilderfassungseinheit (16, 17, 18) entlang der Gleitschiene (8) angeordnet ist.

10. Vorrichtung nach einem der vorgenannten Ansprüche dadurch gekennzeichnet, dass ein Auslauf (23, 24) mit einer Weiche (22) steuerbar ist.

11. Vorrichtung nach einem der vorgenannten Ansprüche dadurch gekennzeichnet, dass ein Detektor als Trigger für die Weiche (22) entlang der Gleitschiene (8) angeordnet ist.

12. Vorrichtung nach einem der vorgenannten Ansprüche dadurch gekennzeichnet, dass mehrere Kameras (16, 17, 18) vorgesehen sind.

13. Vorrichtung nach einem der vorgenannten Ansprüche dadurch gekennzeichnet, dass die Leuchtquelle (13) und die Kameras (16, 17, 18) mit einem optischen Vorsatz (19, 20, 21, 14) ausgestattet sind, die eine telezentrische Anordnung ergeben.

14. Vorrichtung nach einem der vorgenannten Ansprüche, dadurch gekennzeichnet, dass eine Einheit zur Bildauswertung von Kamerabildern mit Mitteln zur Verbesserung der Meßgenauigkeit über das Auflösungsvermögen der Kameras (16, 17, 18) hinaus vorgesehen ist.

15. Vorrichtung nach einem der vorgenannten Ansprüche dadurch gekennzeichnet, dass die Mittel zur Verbesserung der Meßgenauigkeit Mittel zur Vorauswahl eines Suchpfades über eine Kante eines Binärbilds umfassen.

16. Vorrichtung nach einem der vorgenannten Ansprüche dadurch gekennzeichnet, dass die Mittel zur Verbesserung der Meßgenauigkeit Mittel zur Mittelwertbildung über Grauwerte benachbarter Pixel entlang dem Suchpfad umfassen.

17. Vorrichtung nach einem der vorgenannten Ansprüche dadurch gekennzeichnet, dass Mittel zur Interpolation mit wenigstens einer mathematischen Funktion über aus Meßpunkten erhaltene Grauwerte und Mittel zur Bestimmung des Wendepunkts der Interpolationskurve vorhanden sind.

18. Vorrichtung nach einem der vorgenannten Ansprüche dadurch gekennzeichnet, dass Mittel zur Festlegung eines Koordinatensystems durch Fanglinien vorgesehen sind.

19. Vorrichtung nach einem der vorgenannten Ansprüche dadurch gekennzeichnet, dass Mittel zur mehrmaligen Auswertung eines gemessenen Bildes unter der Annahme verschiedener möglicher definierter Positionen des Werkstücks vorhanden sind.

20. Vorrichtung nach einem der vorgenannten Ansprüche dadurch gekennzeichnet, dass ein Eichkörper zur Kalibrierung vorgesehen ist.

21. Verfahren zur Vermessung und Sortierung von Werkstücken dadurch gekennzeichnet, dass eine Vorrichtung nach einem der vorgenannten Ansprüche verwendet wird.

## Revendications

1. Dispositif (1) pour mesurer et trier des pièces, comportant une coulisse (8) pour recevoir les pièces, une source de lumière (13), une unité de détection d'image (16, 17, 18), une unité d'exploitation d'image (50), un dispositif de transport (4, 7) pour transporter les pièces vers la coulisse (8), la coulisse (8), au moins dans la zone du support des pièces, étant constituée d'une matière transparente relativement au spectre de rayonnement de la source de lumière (13) et présentant une forme de V ou une forme de L ayant une ligne au sommet (S),
caractérisé en ce que la coulisse (8) est agencée de façon rotative autour d'un axe de rotation parallèle à la ligne au sommet (S).

2. Dispositif selon la revendication 1,
caractérisé en ce que la source de lumière (13) est une source de lumière infrarouge.

3. Dispositif selon une des revendications précitées,
caractérisé en ce que la matière transparente de la coulisse (8) est du verre.

4. Dispositif selon une des revendications précitées,
caractérisé en ce que deux unités de transport (4, 7) de vitesses différentes sont prévues.

5. Dispositif selon une des revendications précitées,
caractérisé en ce que, comme unité de transport, on prévoit un transporteur à vibrations (4) et/ou un transporteur à bandes.

6. Dispositif selon une des revendications précitées,
caractérisé en ce que des moyens pour le triage préalable sont agencés avant la coulisse (8).

7. Dispositif selon une des revendications précitées,
caractérisé en ce que des moyens de soufflage sont prévus pour éliminer par soufflage des corps étrangers, comme des copeaux ou des impuretés quelconques, avant la coulisse (8).

8. Dispositif selon une des revendications précitées,
caractérisé en ce que la source de lumière (13) est pulsée.

9. Dispositif selon une des revendications précitées,
caractérisé en ce qu'un détecteur est agencé comme déclencheur pour la source de lumière (13) et/ou l'unité de détection d'image (16, 17, 18) le long de la coulisse (8).

10. Dispositif selon une des revendications précitées,
caractérisé en ce qu'une sortie (23, 24) peut être commandée par un aiguillage (22).

11. Dispositif selon une des revendications précitées,
caractérisé en ce qu'un détecteur est agencé comme déclencheur pour l'aiguillage (22) le long de la coulisse (8).

12. Dispositif selon une des revendications précitées,
caractérisé en ce que plusieurs appareils de prise de vues (16, 17, 18) sont prévus.

13. Dispositif selon une des revendications précitées,
caractérisé en ce que la source de lumière (13) et les appareils de prise de vues (16, 17, 18) sont équipés d'un adaptateur optique (19, 20, 21, 14) fournissant un agencement télécentrique.

14. Dispositif selon une des revendications précitées,
caractérisé en ce qu'une unité pour l'exploitation des images des appareils de prise de vues, avec des moyens pour améliorer la précision de mesure au-delà de la résolution des appareils de prise de vues (16, 17, 18), est prévue.

15. Dispositif selon une des revendications précitées,
caractérisé en ce que les moyens pour améliorer la précision de mesure comportent des moyens pour le choix préalable d'une voie de recherche sur un bord d'une image binaire.

16. Dispositif selon une des revendications précitées,
caractérisé en ce que les moyens pour améliorer la précision de mesure comportent des moyens pour former la moyenne de valeurs de gris de pixels voisins le long de la voie de recherche.

17. Dispositif selon une des revendications précitées,
caractérisé en ce que des moyens pour l'interpolation avec au moins une fonction mathématique sur des valeurs de gris obtenues à partir de points de mesure et des moyens pour déterminer le point d'inflexion de la courbe d'interpolation sont prévus.

18. Dispositif selon une des revendications précitées,
caractérisé en ce que des moyens pour déterminer un système de coordonnées par des lignes d'arrêt sont prévus.

19. Dispositif selon une des revendications précitées,
caractérisé en ce que des moyens pour l'exploitation répétée d'une image mesurée, en supposant différentes positions définies possibles de la pièce, sont prévus.

20. Dispositif selon une des revendications précitées,
caractérisé en ce qu'un corps d'étalonnage est prévu pour la calibration.

21. Procédé pour mesurer et trier des pièces,
caractérisé en ce qu'un dispositif selon une des revendications précitées est utilisé.

## Claims

1. Device (1) for measuring and sorting workpieces with a slide rail (8) for supporting the workpieces, a light source (13), a picture recording unit (16, 17, 18), a picture evaluation unit (50), a conveying device (4, 7) for conveying the workpieces to the slide rail (8), wherein the slide rail (8) consists of transparent material in relation to the radiation spectrum of the light source (13), at least in the region of the workpiece support, and has a V- or L-shape with an apex line (5), characterised in that the slide rail (8) is rotatably arranged about an axis of rotation parallel to the apex line (5).

2. Device according to claim 1, characterised in that the light source (13) is an infrared light source.

3. Device according to one of the preceding claims, characterised in that the transparent material of the slide rail (8) is glass.

4. Device according to one of the preceding claims, characterised in that two conveying units (4, 7) having different speeds are provided.

5. Device according to one of the preceding claims, characterised in that a vibro-conveyor (4) and/or a band conveyor are provided as conveying unit.

6. Device according to one of the preceding claims, characterised in that means for pre-sorting are arranged upstream of the slide rail (8).

7. Device according to one of the preceding claims, characterised in that extraction means for extracting foreign bodies such as shavings or other impurities are provided upstream of the slide rail (8).

8. Device according to one of the preceding claims, characterised in that the light source (13) is pulsed.

9. Device according to one of the preceding claims, characterised in that a detector as trigger for the light source (13) and/or the picture recording unit (16, 17, 18) is arranged along the guide rail (8).

10. Device according to one of the preceding claims, characterised in that an outlet (23, 24) can be controlled by a separating filter (22).

11. Device according to one of the preceding claims, characterised in that a detector as trigger for the separating filter (22) is arranged along the slide rail (8).

12. Device according to one of the preceding claims, characterised in that a plurality of cameras (16, 17, 18) are provided.

13. Device according to one of the preceding claims, characterised in that the light source (13) and the camera (16, 17, 18) are equipped with an optical attachment (19, 20, 21, 14) which produce a telecentric arrangement.

14. Device according to one of the preceding claims, characterised in that a unit for picture evaluation of photographs with means for improving the measuring accuracy beyond the resolution of the camera (16, 17, 18) is provided.

15. Device according to one of the preceding claims, characterised in that the means for improving the measuring accuracy comprise means for preselecting a search path via an edge of a binary photograph.

16. Device according to one of the preceding claims, characterised in that the means for improving the measuring accuracy comprise means for averaging by grey scale values of adjacent pixels along the search path.

17. Device according to one of the preceding claims, characterised in that means for interpolation with at least one mathematical function by grey scale values obtained from measuring points and means for determining the turning point of the interpolation curve are provided.

18. Device according to one of the preceding claims, characterised in that means are provided for fixing a system of coordinates by catch lines.

19. Device according to one of the preceding claims, characterised in that means are provided for repeated evaluation of a measured photograph when the workpiece assumes various possible defined positions.

20. Device according to one of the preceding claims, characterised in that a calibrating element is provided for calibration.

21. Process for measuring and sorting workpieces, characterised in that a device according to one of the preceding claims is used.
